# EUROPEAN PATENT APPLICATION

(11) **EP 4 516 581 A1**
(43) Date of publication of application: **05.03.2025**
(21) Application number: 24196814.8
(22) Date of filing: 27.08.2024
(51) Int. Cl.: B60N 2/28

(54) **INFANT CAR SEAT SYSTEM**

(30) Priority: 28.08.2023 CN 202311090375
(71) Applicant: Strolleazi Group Limited, London EC3V 3NG (GB)
(72) Inventor: CARINE, David Shaun, Hampshire, SP11 6DF (GB); TYRER, Emma, London, EC1A 2BN (GB)
(74) Representative: Lewis Silkin LLP

(57) **Abstract**

In some countries, it is a legal requirement for babies, infants and children under a certain age and/or height to be provided with a supplemental car seat when travelling in a vehicle. It is desirable to improve the cornering comfort and vehicle collision, particularly side impact, characteristics of the child car seat. The present disclosure provides an infant car seat system (100) comprising: a docking module (300) configured to be securable to a vehicle seat; an infant carrier module (200) configured to receive an infant therein, the infant car seat system (100) configured such that the infant carrier module (200) is rotatable within the docking module (300) about a rotation axis (410); and a rotation stop (380) selectively operable to restrict rotation of the infant carrier module (200) relative to the docking module (300) about the rotation axis (410); wherein the rotation stop (380) is compressible in a direction of rotation about the rotation axis (410).

## Description

### Field of the Disclosure

The present disclosure relates generally to an infant car seat system and finds particular, although not exclusive, utility in providing an infant car seat system with improved side impact protection characteristics.

### Background

In some countries, it is a legal requirement for babies, infants and children under a certain age, height and/or weight to be provided with a supplemental car seat when travelling in a vehicle. Such car seats typically improve the child's safety when travelling in a vehicle, particularly in a collision scenario, when compared to the use of a typical seat belt alone. The shape, size and arrangement of the car seat is typically dependent on the child's age and/or height. A child may be required to use a so-called baby car seat from birth until approximately 1 year old, a so-called toddler car seat from approximately 1 year old to approximately 4 years old, and a so-called booster seat from approximately 4 years old until the child no longer requires the use of a car seat.

Typical vehicle seats and associated seatbelt systems are designed for adults and are therefore not ideally suited for use with a child. A primary function of a child car seat is to improve safety and survivability of a child in a vehicle collision scenario, typically by shielding the child and reducing peak impact forces imparted on the child. Prior known car seat systems make use of significant amounts of engineering or high performance foams and other padding, which may increase the cost of the car seat system significantly. The accessibility of the car seat system is therefore reduced by use of such foams and padding.

It is typically necessary for an infant car seat system to be compatible with a wide range of vehicles, such as various car makes and models. To ensure wide compatibility, regulators may impose a three-dimensional space or box within which the child car seat must fit. An example of such a regulation may be UN ECE R129/03. However, as vehicle seats and interiors vary in size, there is typically additional space surrounding the child car seat when the child car seat is fitted within a vehicle. It is known to use deployable structures, such as fold out wings, to limit a distance between the child car seat and an interior of a vehicle such as an interior surface of a door. Deployable devices may allow for the additional space surrounding the child car seat to be used to reduce so-called ride down times, and deployable devices may improve vehicle collision characteristics. However, deployable devices are typically not able to be used in regulatory testing as their deployment would mean that the child car seat no longer fits within the regulator-enforced three-dimensional space or box. Furthermore, an installer and user of the child car seat, such as a parent or carer, may forgot to deploy the deployable device or may incorrectly deploy the deployable device. In addition, a shape, size and spacing of an interior of a car door varies significantly between make and model, and the effectiveness of a deployable device is therefore dependent on vehicle make and model.

Furthermore, it is not uncommon for children to experience so-called travel sickness or motion sickness, or to otherwise experience discomfort whilst travelling as a passenger in a vehicle. The issues leading to discomfort may be triggered and/or worsened whilst cornering in the vehicle. Accordingly, it is desirable to provide improved cornering characteristics to increase comfort.

Aspects of the present disclosure seek to provide a car seat system to alleviate or reduce the severity of the above-mentioned problems and provide an infant car seat system with improved cornering comfort and side impact protection characteristics.

### Summary

According to a first aspect of the present disclosure, there is provided an infant car seat system comprising: a docking module configured to be securable to a vehicle seat; an infant carrier module configured to receive an infant therein, the infant car seat system configured such that the infant carrier module is rotatable within the docking module about a rotation axis; and a rotation stop selectively operable to restrict rotation of the infant carrier module relative to the docking module about the rotation axis; wherein the rotation stop is compressible in a direction of rotation about the rotation axis.

In this way, rotation of the infant carrier module, due to cornering forces or side impact collision forces, would be counteracted by the compressible rotation stop to provide a more comfortable ride or reduced peak collision forces respectively. The comfort and/or safety of the infant is therefore improved.

The term 'infant' used herein may refer to a baby, a toddler or a child.

An infant car seat system may be a system configured and intended to be secured to a vehicle and allow for a child to be seated thereon. An infant car seat system may modify a typical vehicle seat, which are designed for use by adults, to improve the suitability of the vehicle seat for use with a child.

The docking module being securable to a vehicle seat may mean that the docking module is attachable, releasably or non-releasably, to the vehicle seat or the vehicle such that the docking module rests upon the vehicle seat.

The infant carrier module being rotatable within the docking module about a rotation axis may mean that the infant carrier module is rearrangeable relative to the docking module by rotating the infant carrier module relative to the docking module, or a portion of the docking module. The docking module may be multi-part, with a first part, such as a frame portion, attached to the infant carrier module and rotatable relative to a second part, such as a base portion. The rotation axis may be arranged substantially vertically with the docking module attached to a vehicle seat. The infant carrier module may be rotatable between a forward facing position and a rearward facing position, via a sideways facing position.

The rotation stop may be a component configured to engage or mutually connect the infant carrier module and the docking module to restrict relative rotation of the infant carrier module and the docking module. The rotation stop may be positioned on the docking module and be configured to selectively engage with the infant carrier module. Alternative, the rotation stop may be positioned on the infant carrier module and be configured to selectively engage with the docking module. Preferably, the docking module is multi-part, wherein a first part of the docking module is rotatable relative to a second part of the docking module, and the rotation stop is configured to restrict rotation of the first part relative to the second part. The infant carrier module may be attachable to the first part or the second part, and the other of the first part and the second part may be attachable to the vehicle seat.

The rotation stop being selectively operable to restrict rotation of the infant carrier module relative to the docking module about the rotation axis may mean that a user may operate, engage or actuate the rotation stop to restrict rotation of the infant carrier module, or derestrict rotation of the of the infant carrier module. Rotation being restricted may mean that rotation is not prevented entirely, but that rotation is allowed to a lesser extent with the rotation stop engaged than without the rotation stop engaged. Compression of the rotation stop may allow for the relatively small rotation to occur.

The rotation stop being compressible in a direction of rotation about the rotation axis may mean that the rotation stop is configured to compress, flex, or otherwise allow a relatively small rotation of the infant carrier module relative to the docking module upon application of a force or torque on the infant car seat system. Allowing a relatively small rotation may mean that, in a cornering or side impact collision scenario, forces that are applied to an infant positioned in the infant carrier module may be spread over a greater time frame and maximum or peak forces applied to the infant are thereby reduced. Reducing the maximum or peak force applied to the infant improves safety and comfort.

A centre of gravity of the infant carrier module, with an infant positioned therein, may be spaced from the rotation axis. In this way, external forces applied to the system may cause a force moment and rotation of the infant carrier module and infant about the rotation axis. Said force moment and rotation of the infant carrier module may be at last partially or fully counteracted by the rotation stop to reduce a peak force or peak forces applied to or experienced by the infant. As such, a severity of any injury suffered by the infant may be reduced.

The infant carrier module may comprise a seat portion attached to a backrest portion via a locking hinge having two locking positions such that the infant carrier module is configurable in: an upright position in which the seat portion and the backrest portion are relatively inclined at a first angle; and a lie flat position in which the seat portion and the backrest portion are relatively inclined at a second angle, greater than the first angle.

In this way, the system may be used to transport an infant in a lying and sitting orientation respectively, whilst the infant carrier module may be used in the upright position to transport an infant in an upright or sitting orientation whilst travelling in a vehicle.

A locking hinge having two locking positions may be any form of rotatable attachment means that allow for the two connected components to relatively rotate, whilst also being securable in at least two relative inclinations.

The first angle may be any angle that provides a conventional sitting arrangement. For example, the first angle may be in the range of 80° to 135°. The second angle may be any angle that provides a conventional lying arrangement. For example, the second angle may be in the range of 135° to 180°. Other angles and ranges are envisaged.

The seat portion may be a portion of the infant car seat system upon which an infant's bottom and legs may be supported. The backrest portion may be a portion of the infant car seat system upon which the infant's back, arms and head may be supported. The backrest may or may not include a headrest, as discussed herein.

The infant car seat system may be configured such that the infant carrier module is adjustable within the docking module. The adjustability and flexibility of the system means that the car seat system may be usable with children of various ages and heights. Furthermore, the infant carrier module may be adjusted within the docking module, such as reclined within the docking module, to provide a more pleasant environment for an infant. Additionally, the infant car seat system may be sustainable. In particular, the infant car seat system may be adaptable to the needs of a growing child without needing to provide additional components, nor dispose of components as the child grows.

In this regard, adjustable may mean that the seat portion and the backrest portion are relatively inclinable. Additionally, or alternatively, adjustable may mean that a headrest portion of the infant carrier module is adjustable in position relative to the backrest portion and/or the docking module. Additionally, or alternatively, adjustable may mean that the infant carrier module is reclinable within the docking module. In this way, the infant carrier module may be adjustable within the docking module, in particular as the child grows and becomes larger. Accordingly, there is no need to provide additional components to continue use of the system with the growing child. Additionally, there is no need to dispose of components as the child grows, thereby providing a sustainable system. Furthermore, the infant carrier module may be the sole seat structure, such that the infant carrier module provides the seat for the infant in all use conditions of the system.

The relative inclinability of the seat portion and the backrest portion may be prevented when the infant carrier module is docked in the docking module. In this way, the infant carrier module may only be docked in the docking module when arranged in the upright or sitting position. As such, an infant may be positioned in a seated arrangement when being transported in a vehicle, which may improve and enhance safety. Alternatively, the infant carrier module may be configured to be docked in the docking module when configured in either the upright position or the lie flat position.

The infant carrier module may be releasably securable in the upright position and/or the lie flat position. Additional and/or intermediate positions are envisaged. The locking hinge may comprise suitable locking positions, as required. In this way, the infant carrier module may be arranged at an inclination that is comfortable for an infant. The locking hinge may comprise three, four, five, six or any other number of locking positions, to provide a user with greater flexibility in selecting a suitable inclination angle. In particular, the locking hinge may have four locking positions, with the two locking positions described above relative to the upright and lie flat positions being the relatively most extreme angled positions and the further two locking positions being intermediate positions.

The infant carrier module may further comprise a releasable locking mechanism configured to selectively secure the infant carrier module in the upright position or the lie flat position. The releasable locking mechanism may include an actuator operable to release the locking mechanism and allow the relative inclination of the seat portion and the backrest portion to be adjusted. The actuator may be incorporated into a seat belt guide which may be positioned on a rear of the backrest portion.

The docking module may comprise a base portion and a shell portion rotatably attached to the base portion. The infant carrier module may be configured to be releasably docked to the shell portion. In this way, the infant carrier module may be rotatable relative to the base portion and therefore rotatable relative to a vehicle seat to which the base portion may be attached. Accordingly, an infant may be positioned facing forwards, backwards, or there between. The infant may be positioned facing forwards or backwards for travel, and may be moved to a sideways facing position to improve ease of placing or removing the infant from the vehicle. The base portion may comprise ISOFIX connectors or an ISOFIX assembly. The ISOFIX connectors or assembly may releasably yet robustly connect the base portion to the vehicle. The ISOFIX assembly may comprise an extendable arm securable at a plurality of lengths with a ratchet and pawl system. The extendable arm may be biased towards an arrangement in which the extendable arm has a greater length. The ISOFIX assembly may comprise two vehicle locks configured such that both vehicle locks must be released to remove the ISOFIX assembly from the vehicle. The ISOFIX assembly may comprise one or more switches configured to be operated upon connection of the ISOFIX assembly to the vehicle such that a connection status of the ISOFIX assembly is determinable, in use. The ISOFIX assembly may comprise two substantially identical arms, one on each side of the car seat. To install the system, a user may position the ISOFIX arm(s) at the greatest length, secure the arm(s) to the vehicle, and then push the infant car seat system up against the vehicle seat such that the ISOFIX arm(s) reduce in length and are held at the optimal length by the ratchet and pawl.

The infant car seat system may further comprise a support leg. The support leg may be rotatably attached to the docking module. The support leg may be rotatable between an extended position in which the support leg extends away from the docking module, and a stowed position in which the support leg lies adjacent to the docking module along a length of the support leg. In this way, the support leg may be extended and arranged to rest on a floor of the vehicle, or may be stowed away. The support leg may be extended when transporting a relatively young infant in a rearward or forward facing position. The support leg may be stowed when transporting a relatively older infant in a forward facing position. The support leg may be length adjustable and securable at a plurality of lengths. The support leg may include a pressure sensor configured to determine a pressure applied to a free end of the support leg such that a desired installation of the support leg is determinable, in use. The system may be configured to provide a visual and/or audible notification when a pressure measured by the pressure sensor falls below a threshold pressure level.

The support leg may be rotatably attached to the docking module via an extendable nose. The extendable nose may be configured to be translatable relative to the docking module along an axis substantially perpendicular to a longitudinal axis of the support leg when the support leg is positioned in the extended position. The extendable nose may be positioned on a front of the docking module and may be translatable out of, and into, the front of the docking module. The infant car seat system may further comprise a nose lock configured to secure the extendable nose relative to the docking module. The nose lock may be configured to secure the extendable nose in a plurality of extended positions. In this way, a user may position the support leg correctly or preferably in the foot well of the vehicle. With the extendable nose fully retracted into the docking module, an outer housing of the extendable nose may be flush with an outer housing of the docking module. In this way, the extendable nose, when fully retracted, may be hidden or may not project from the docking module. The extendable nose may comprise a handle arranged such that a user may pull or push the handle to move the extendable nose. The nose lock may be incorporated into the handle. To deploy the support leg, the support leg may be rotated into the extended position and the extendable nose fully extended. The docking module may then be positioned on the vehicle seat. The support leg may only be correctly positioned when the extendable nose is fully extended. The extendable nose may be at least partially retracted such that the support leg is positioned in alternative positions in the foot well of the vehicle. The support leg may then be adjusted in length such that a foot of the support leg is correctly placed on the floor of the vehicle.

The infant carrier module may comprise one or more upholstered portions, harnesses and/or any other features known in the art or described in International (PCT) Patent Application number PCT/GB2021/051393.

The infant car seat system may be configured such that the infant carrier module is releasably dockable within the docking module. In this way, the infant carrier module may be undocked from the docking module and used to transport an infant outside of a vehicle. The infant carrier module being releasably docked with the docking module may mean that the infant carrier module may be selectively seated upon and/or secured to the docking module such that relative movement between the docking module and the infant carrier module whilst docked thereon is at least partially prevented, prohibited, reduced or inhibited.

The system may further comprise a docking lock mechanism configured to selectively prevent undocking of the infant carrier module from the docking module. In this way a user may securely dock the infant carrier module within the docking module such that, whilst driving and at other times, the user can ensure that the infant carrier module may not be undocked. Such an arrangement may improve the safety of the system. The docking lock mechanism may be configured to prevent undocking of the infant carrier module from the docking module when the shell portion is secured in the first rotational position or the second rotational position. In this way, the infant carrier module may not be undocked when arranged in the first and/or second rotational positions. The infant car seat system may further comprise a release actuator configured to be operable to release the docking lock mechanism. The system may also comprise an emergency release configured to allow the infant carrier module to be undocked whilst arranged in any orientation, such that an infant may be removed from a vehicle in an emergency situation. The first and second rotational positions may relate to forward and backward facing positions, in use. Accordingly, the docking lock mechanism may provide an additional layer of attachment security between the infant carrier module and the docking module when the infant car seat system is configured in an arrangement typically used whilst travelling in a vehicle. The infant carrier module may only be undocked from the docking module when the infant carrier module is rotated to an intermediate rotational position, such as a position facing sideways to the direction of travel. The docking lock mechanism may provide additional strength and security that is particularly important in a vehicular collision or other such scenario.

The docking lock mechanism may be configured to automatically release when the shell portion is arranged between the first rotational position and the second rotational position. In this way, a user may simply unlock the docking lock mechanism by rotating the infant carrier module from a locked position, which would typically occur when a parent is removing an infant from a vehicle. Alternatively, the docking lock mechanism may comprise a release actuator that a user may actuate to release the docking lock mechanism.

The infant car seat system may further comprise a secondary safety lock configured to releasably secure the infant carrier module to the shell portion when the infant carrier module is configured in the upright arrangement. The secondary safety lock may be operational at all rotational positions of the shell portion relative to the base portion. The infant carrier module will typically be arranged in the upright arrangement when a vehicle is in motion. Accordingly, the secondary safety lock may provide an additional point of attachment and securement between the infant carrier module and the docking module, which is particularly important when the vehicle is in motion.

The infant carrier module may comprise a seat portion attached to a backrest portion. The infant carrier module may further comprise a detachable carrier handle configured to be securable to the seat portion and/or the backrest portion. The carrier handle may be used to carry the infant carrier module, and an infant secured therein, when the infant carrier module is not docked in the docking module. The handle may be selectively removed when the infant carrier module is docked, such as when the system is used as a car seat for a relatively older infant. The carrier handle may be configured to be securable to the seat portion and/or the backrest portion at a plurality of angles relative to the seat portion. The carrier handle may comprise an actuator, such as a button or pair of buttons adjacent to the carrier handle hinge points, that a user may actuate to release and reposition the carrier handle. A total of two, three, four, or any other number of positions may be provided. The carrier handle may be detachable by way of a locking clip and release lever. The locking clip may be slid from a secure to a release position, wherein the release lever may be opened, such as through 90°, to release the carrier handle. The carrier handle may then be removed from the infant carrier module. The carrier handle may comprise portions, such as moulded belt guides, suitable for guiding and retaining an automobile seatbelt or lap belt. Said portions may allow the infant carrier module to be secured within a vehicle via the integral seatbelt without, or in addition to, the docking module or ISOFIX connectors.

The infant carrier module comprises a seat portion attached to a backrest portion. The system may further comprise a headrest attached to the backrest portion and releasably attachable to the docking module.

In this way, as an infant grows, the headrest may be moved up the backrest portion away from the seat portion and connect to the docking module, thereby providing a larger seating area for the infant whilst also providing a secure and reliably support to the headrest.

The headrest may be attached to the backrest portion of the infant carrier module. Additionally, or alternatively, the headrest may be attachable to the docking module. In this way, the headrest may be positioned to provide the optimal comfort and/or safety for the infant. Additionally, the headrest may be moved further from the seat portion as the infant grows. The headrest may comprise an upholstered portion. In this way, a more comfortable and safe headrest may be provided.

The headrest may be slidably attached to the backrest portion. The docking module may comprise a headrest slot. With the infant carrier module docked in the docking module, the headrest may be slidable away from the backrest portion and into the headrest slot. The headrest may comprise a protrusion configured to engage with the headrest slot. In this way, the headrest may be arranged in a position that is comfortable and safe for the infant, which is dependent on the size of the infant. Furthermore, the headrest may be moved as the infant grows. The headrest may be adjustable between a plurality of positions. In this way, the height of the headrest is adjustable dependent on the size of the infant. Preferably, the headrest is adjustable between at least three positions. The headrest may be lockable in the at least three positions. The headrest may be slidably moveable between the at least three positions. The headrest may remain attached to the infant carrier module at all times. In this way, with only a single headrest provided for all arrangements, a more convenient system may be provided. Furthermore, the risk of permanent or accidental misuse may be prevented, thereby providing a safer system.

The rotation stop may be resilient. Accordingly, the rotation stop may recoil or spring back into an original shape following removal of a compressive force. The rotation stop may impart or exert a force on an object or component applying the compressive force to counteract or at least partially act against the compressive force. In this way, the rotation stop may at least partially repel a compressive force acting on the rotation stop, thereby reducing a maximum or overall peak force.

Alternatively, the rotation stop may be configured to crumple, shear, or otherwise resist rotation of the infant carrier module relative to the docking module, thereby reducing maximum or peak forces, without returning to an original shape as with a resilient member. A rotation stop configured to crumple, shear, or otherwise resist rotation in said manner may be useful in a vehicle collision scenario. Typically, following a vehicle collision, a child car seat is replaced. In this regard, the damage caused to the rotation stop may not be a significant consideration. The rotation stop may be replaceable such that, following damage to the rotation stop in a vehicle collision scenario, the rotation stop may be replaced.

The rotation stop may comprise: a fixed portion; a first moveable portion configured to be moveable relative to the fixed portion between a first position in which the moveable portion is spaced a first distance from the fixed portion, and a second position in which the moveable portion is spaced a second distance less than the first distance from the fixed portion; and a first resilient member positioned between the fixed portion and the first moveable portion. The first resilient member may be configured to urge the first moveable portion away from the second position and towards the first position. As such, the rotation stop being compressible may mean that the first moveable portion may be moveable closer to the fixed portion. Rotation of the infant carrier module in a first direction may cause the first moveable portion to be moved from the first position to the second position, against the action of the first resilient member. In this way, the rotation stop may allow for some rotation in the first direction, and the first resilient member may resist said rotation. The action of the first resilient member may reduce a peak force experienced by a child positioned in the infant carrier module during cornering or vehicle collision scenarios. Movement of the first moveable portion from the second position away from the first position may be prevented by the fixed portion or otherwise. Accordingly, once the first moveable portion has been moved into the second position, further rotation in the first direction may be prevented.

The first moveable portion may be positionable relative to the fixed portion in a first intermediate position between the first position and the second position. The first resilient member may be configured such that a greater force is required to move the first moveable portion from the first position to the first intermediate position than is required to move the first moveable portion from the first intermediate position to the second position. The first resilient member may comprise a first sub-member and a second sub-member. The first sub-member may be configured to resist movement of the first moveable portion from the first position to the first intermediate position, and the second sub-member may be configured to resist movement of the first moveable portion from the first intermediate position to the second position. The second sub-member may have a greater rating, or require a greater force to compress, than the first sub-member. Alternatively, the first sub-member may be configured to resist movement of the first moveable portion from the first position to the first intermediate position, and both the first sub-member and the second sub-member may be configured to resist movement of the first moveable portion from the first intermediate position to the second position. In this way, the first and second sub-members may combine to resist movement of the first moveable portion from the first intermediate position to the second position.

The rotation stop may therefore be configured to provide desirable cornering comfort characteristics, by having the first moveable portion moveable between the first position and the first intermediate position, and to provide desirable vehicle side-impact collision characteristics, by having the first moveable portion moveable between the first intermediate position and the second position.

The rotation stop may further comprise: a second moveable portion configured to be moveable relative to the fixed portion between a third position in which the moveable portion is spaced a third distance from the fixed portion, and a fourth position in which the moveable portion is spaced a fourth distance less than the third distance from the fixed portion; and a second resilient member positioned between the fixed portion and the second moveable portion. The second resilient member may be configured to urge the second moveable portion away from the fourth position and towards the third position. A direction of movement of the first moveable portion from the first position to the second position may be in a direction opposite to a direction of movement of the second moveable portion from the third position to the fourth position. As such, the rotation stop being compressible may mean that the second moveable portion may be moveable closer to the fixed portion. Rotation of the infant carrier module in a second direction, opposite the first direction discussed above with reference to the first moveable portion, may cause the second moveable portion to be moved from the third position to the fourth position, against the action of the second resilient member. In this way, the rotation stop may allow for some rotation in the second direction, and the second resilient member may resist said rotation. The action of the second resilient member may reduce a peak force experienced by a child positioned in the infant carrier module during cornering or vehicle collision scenarios. Movement of the second moveable portion from the fourth position away from the third position may be prevented by the fixed portion or otherwise. Accordingly, once the second moveable portion has been moved into the fourth position, further rotation in the second direction may be prevented.

The first resilient member and the second resilient member may be portions of a single spring, elastic member, or other known resilient member. In one example, a spring may be positioned between the first moveable portion and the second moveable portion, passing through or alongside the fixed portion, thereby providing the first resilient member and the second resilient member.

The second moveable portion may be positionable relative to the fixed portion in a second intermediate position between the third position and the fourth position. The second resilient member may be configured such that a greater force is required to move the second moveable portion from the third position to the second intermediate position than is required to move the second moveable portion from the second intermediate position to the fourth position. The second resilient member may comprise a third sub-member and a fourth sub-member. The third sub-member may be configured to resist movement of the second moveable portion from the third position to the second intermediate position, and the fourth sub-member may be configured to resist movement of the second moveable portion from the second intermediate position to the fourth position. The fourth sub-member may have a greater rating, or require a greater force to compress, than the third sub-member. Alternatively, the third sub-member may be configured to resist movement of the second moveable portion from the third position to the second intermediate position, and both the third sub-member and the fourth sub-member may be configured to resist movement of the second moveable portion from the second intermediate position to the fourth position. In this way, the third and fourth sub-members may combine to resist movement of the second moveable portion from the second intermediate position to the fourth position.

The rotation stop may therefore be configured to provide desirable cornering comfort characteristics, by having the first moveable portion moveable between the first position and the first intermediate position, and to provide desirable vehicle side-impact collision characteristics, by having the first moveable portion moveable between the first intermediate position and the second position.

The rotation stop may be configured to be moveable between: an engaged position in which the rotation stop is configured to restrict rotation of the infant carrier module relative to the docking module about the rotation axis; and a disengaged position in which rotation of the infant carrier module relative to the docking module about the rotation axis is unrestricted. Accordingly, the rotation stop may be retracted or otherwise moved away from the engaged position to the disengaged position to allow free rotation of the infant carrier module relative to the docking module. Arranging the rotation stop in the disengaged position may allow a user, such as a parent, to reorient the infant carrier module, for example from the forward facing position to the rearward facing position, or into a sideways facing position.

In one example, the rotation stop may be positioned on the docking module and may be configured, in the engaged position, to engage with the infant carrier module. The rotation stop may be moved away from the infant carrier module and into the disengaged position, wherein the rotation stop may be spaced from the infant carrier module.

In another example, the rotation stop may be positioned on the infant carrier module and may be configured, in the engaged position, to engage with the docking module. The rotation stop may be moved away from the docking module and into the disengaged position, wherein the rotation stop may be spaced from the docking module.

In a further example, the docking module may be multi-part. A first part may be configured to be rotatable relative to a second part. The infant carrier module may be attached or attachable to the first part or the second part. The other of the first part and the second part may be attachable to a vehicle seat. The rotation stop may be positioned on the first part or the second part of the docking module and may be configured, in the engaged position, to engage with the other of the first part and the second part. The rotation stop may be moved away from the other of the first part and the second part and into the disengaged position, wherein the rotation stop may be spaced from the other of the first part and the second part.

The rotation stop may be configured to be urged from the disengaged position to the engaged position. The infant car seat system may further comprise an actuator operable to move the rotation stop from the engaged position to the disengaged position. The rotation stop may comprise a resilient member such as a spring, an elastic member, or any other known resilient member. The resilient member may be configured to urge the rotation stop into the engage position. The actuator may be actuated against the action of the resilient member. Accordingly, the rotation stop may be positioned in the disengaged position only whilst the actuator is actuated. The rotation stop may therefore normally be positioned in the engaged position. In this way, a user may not leave the rotation stop in the disengaged position. The actuator may be positioned away from, or out of reach of, an infant when the infant is positioned in the infant carrier module. For example, the actuator may be positioned on a rear or underside of the infant carrier module, or on the docking module. In this way, the infant positioned in the infant carrier module may not be able to actuate the actuator.

The infant car seat system may comprise a plurality of rotation stops. The plurality of rotation stops may be distributed rotationally around the rotation axis. Alternatively or additionally, the plurality of rotation stops may be arranged at different lateral distances from the rotation axis. Each rotation stop of the plurality of rotations stops may be identical to other rotation stops, or different to other rotation stops, for example by having different spring characteristics. In one example, the infant car seat system may comprise two identical rotation stops spaced an equal distance laterally from the rotation axis and spaced 180° rotationally about the rotation axis. In this example, one rotation stop may be arranged in a forward portion of the docking module and the other rotation stop may be arranged in a rearward portion of the docking module. Alternatively, one rotation stop may be arranged in a left side portion of the docking module and the other rotation stop may be arranged in a right side portion of the docking module.

As discussed herein, the rotation stop may be spaced laterally from the rotation axis. A distance between the rotation axis and the rotation stop may be considered when choosing desirable characteristics of the rotation stop. For example, a desired or required spring rating and travel distance may be dependent on a distance between the rotation axis and the rotation stop. A relatively large distance between the rotation axis and the rotation stop may mean that a relatively weak spring with a relative large travel may be desired or required. A relatively small distance between the rotation axis and the rotation stop may mean that a relatively strong spring with a relatively short travel may be desired or required.

### Brief Description of the Drawings

The disclosure will be further described in embodiments identified in the accompanying figures in which:
Figure 1 is a perspective view of an infant car seat system;
Figure 2 is a perspective view of the infant car seat system shown in Figure 1 with the infant carrier module docked in the shell portion of the docking module, with the shell portion shown removed from the base portion of the docking module;
Figure 3 is an enlarged view of a section of the docking module shown in Figure 2;
Figure 4 is a plan view of the rotation stop of the docking module;
Figure 5 is a side sectional view of the rotation stop shown in Figure 4; and
Figure 6 is a side schematic view of the infant car seat system shown in Figure 1.

### Detailed Description

The following description presents exemplary embodiments and, together with the drawings, serves to explain principles of the disclosure. However, the scope of the invention is not intended to be limited to the precise details of the embodiments, since variations will be apparent to a skilled person and are deemed also to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of' such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to embodiments with particular combinations of features, however, it is envisaged that further combinations and cross-combinations of compatible features between embodiments will be possible. Indeed, isolated features may function independently as an invention from other features and not necessarily require implementation as a complete combination.

The general descriptive terms "child car seat" related to the field of the disclosure is also not intended to be limiting. In the present field there are a wide range of terms applicable to the present disclosure and can be used interchangeably to describe the device, without affecting its scope and interpretation. For example, a "child car seat" can be a catch-all term for a safety device used by a baby, toddler or child for both sitting and/or laying down in a flat position, e.g. a booster seat or carrier respectively.

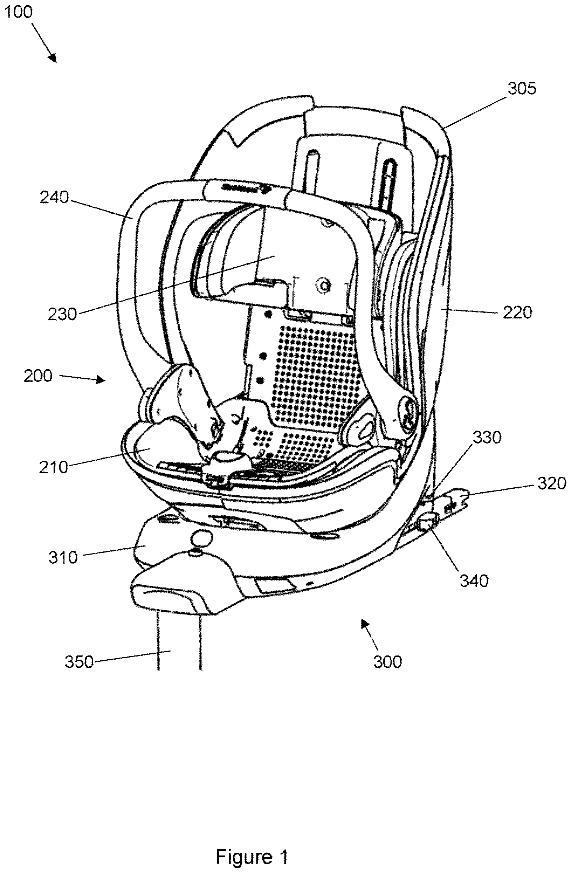

Figure 1 is a perspective view of an infant car seat system 100 with an infant carrier module 200 and a docking module 300. An infant may be positioned in the infant carrier module 200. The infant carrier module 200 includes a seat portion 210 and a backrest portion 220 rotationally or pivotably attached thereto. The relative rotation of the seat portion 210 and the backrest portion 220 may be achieved via a locking hinge as discussed herein. A release actuator (not shown) may be provided and actuating the release actuator unlocks the hinge connecting the seat portion 210 and the backrest portion 220 and allows the relative inclination between seat portion 210 and the backrest portion 220 to be adjusted. The release actuator may be incorporated into a seat belt guide, on a rear of the infant carrier module 200, or at any other preferred location.

The infant carrier module 200 also includes a headrest 230 and a carrier handle 240. An infant may be positioned in the infant carrier module 200 with their bottom and legs supported by the seat portion 210, their back and arms supported by the backrest portion 220, and their head supported by the headrest 230. The headrest 230 is slidably adjustable between at least a first lower headrest position, a second intermediate headrest position, and a third upper headrest position. As the child grows, the position of the headrest 230 can be adjusted. The headrest 230 can be locked into position to prevent accidental adjustment of the headrest 230 height.

An integral upholstered portion may be provided covering the seat portion 210, the backrest portion 220 and the headrest 230, for comfort. An integral harness may also be provided to secure the infant into the infant carrier module 200. The harness may be stowable within the infant carrier module 200 when not in use. The infant carrier module 200, and an infant positioned therein, may be carried by way of the carrier handle 240. The carrier handle 240 may be adjustable rotationally in angle relative to the seat portion 210 and/or the backrest portion 220.

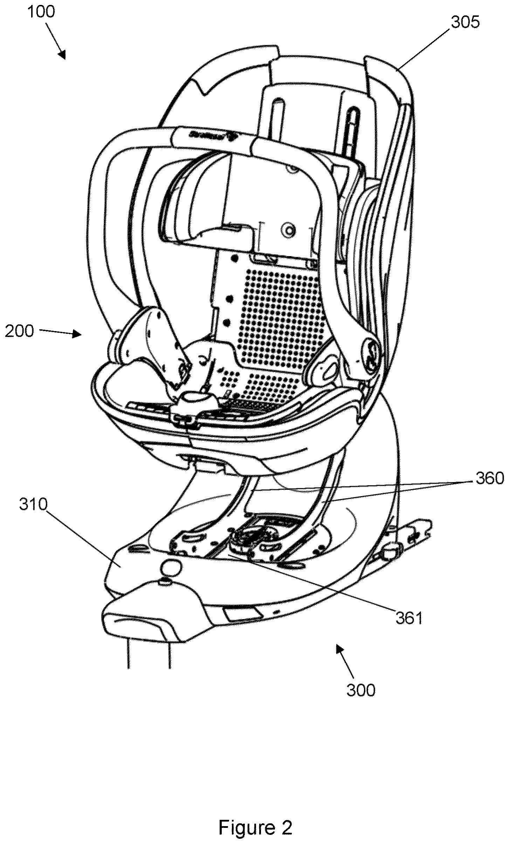

The infant carrier module 200 may be releasably docked in the docking module 300, described in detail with reference to Figure 2 below.

The docking module 300 includes a shell portion 305, into which the infant carrier module 200 may be docked, and a base portion 310, which supports the shell portion 305. The shell portion 305 includes locking guides and/or mechanisms to ensure that the infant carrier module 200 is positioned and aligned correctly and securely attached to the docking module 300.

The shell portion 305, and infant carrier module 200 attached to the shell portion 305, is rotatable relative to the base portion 310 about an axis running approximately vertically in the view shown in Figure 1.

The base portion 310 includes ISOFIX latches 320 to allow the base portion 310 to be securely connected to a vehicle. ISOFIX installation levers 330 are provided and cause the ISOFIX latches 320 to slide out when pressed. In some examples, the levers 330 may instead be buttons. ISOFIX sliders 340 are provided to decouple the ISOFIX connectors 320. When installed, the ISOFIX sliders 340 will indicate that the ISOFIX latches 320 are correctly installed, and may be slid to decouple the ISOFIX latches 320.

The docking module 300 also includes a support leg 350 (partially shown) configured to extend from the base portion 310 to the floor of the vehicle. The support leg 350 may be rotatably attached to the base portion 310 such that the support leg is movable between an extended position, as shown in Figure 1, and a stowed position wherein the support leg 350 lies adjacent to an underside of the base portion 310. As the support leg 350 can be stowed away adjacent to the base portion 310 as the child grows, this allows the docking module 300 to be reconfigured to accommodate the larger or older child.

Figure 2 is a perspective view of the infant car seat system 100 shown in Figure 1 with the infant carrier module 200 nested in the shell portion 305 of the docking module 300, and the infant carrier module 200 and shell portion 305 removed from the base portion 310.

The infant carrier module 200 may be docked in the shell portion 305 by lowering the infant carrier module 200 onto the shell portion 305. Locking mechanisms may then releasably attach the infant carrier module 200 to the shell portion 305. The attachment may be automatic, or may be affected by actuation of an actuator by a user, such as a parent. The base portion 310 includes a frame 360. The frame 360 is shown to comprise two curved plate members that engage with the shell portion 305 at multiple locations on a rear side of the shell portion 305. The frame 360 also includes a bottom substantially planar plate portion 361. The curve of the frame members substantially matches a curve of a rear of the shell portion 305. In use, the shell portion 305 is configured to be fixedly attached to the frame 360.

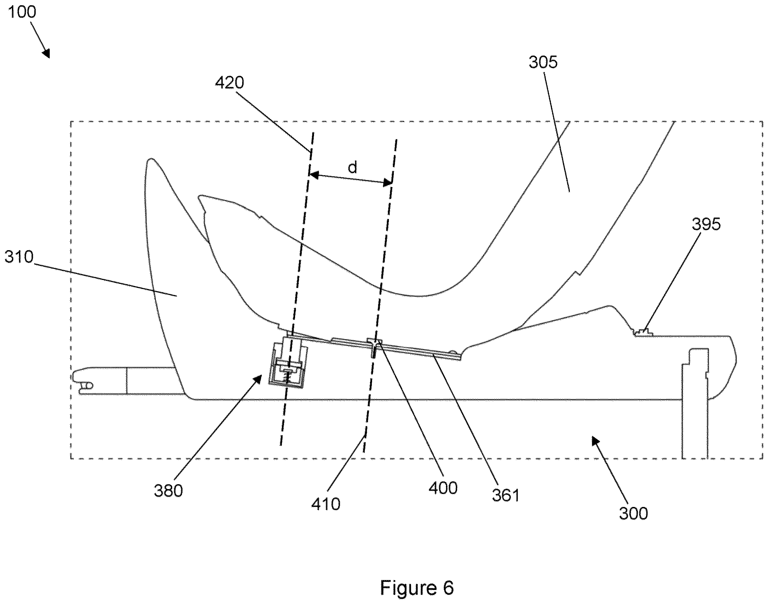

The frame 360, the shell portion 305 and the infant carrier module 200 when attached to the shell portion 305, are rotatable relative to the remainder of the base portion 310. Rotation of the infant carrier module 200 relative to the base portion 310 of the docking module 300 is discussed in more detail with reference to Figure 6 below.

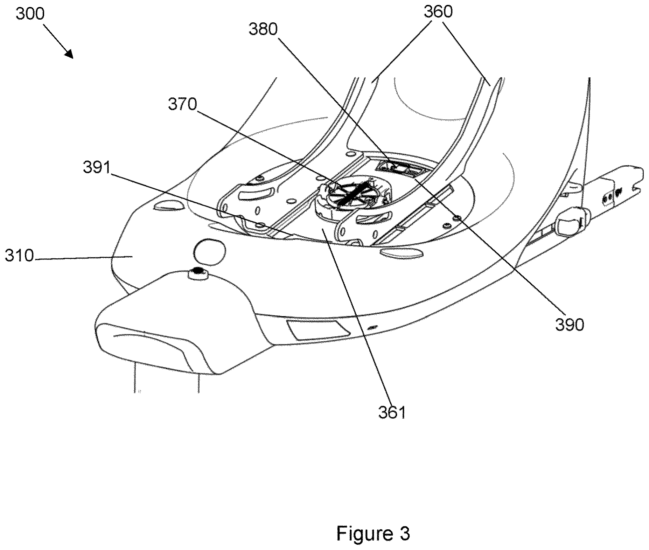

Figure 3 is an enlarged view of a section of the docking module 300 shown in Figure 2. The frame 360 is rotatable relative to the base portion 310 via a hub 370. The frame 360, and the shell portion (not shown) and an infant carrier module (not shown) attached thereto, is rotatable about an axis substantially vertical in the view shown in Figure 3, wherein the axis passes through a centre of the hub 370. Rotation of the infant carrier module with respect to the base portion 310 is discussed in greater detail with reference to Figure 6 below.

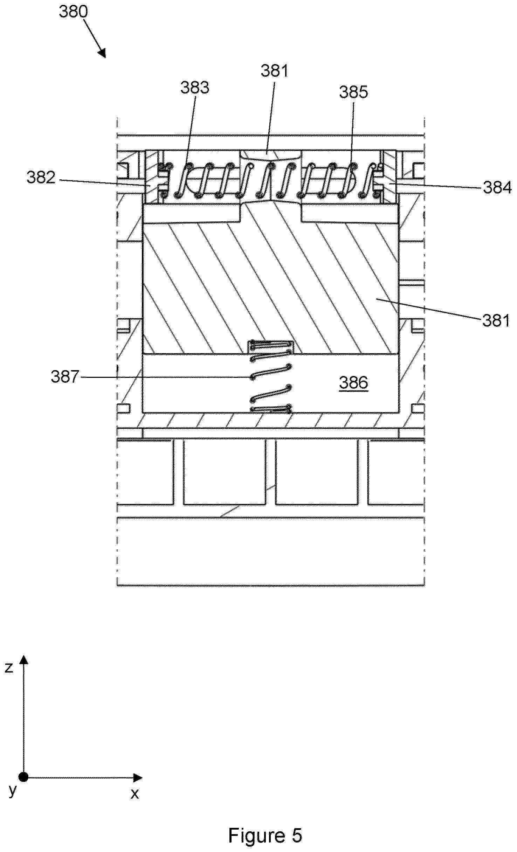

The base portion 310 also includes a rotation stop 380 laterally offset from the hub 370. The rotation stop 380 is retractable into and out of the base portion 310, as discussed in detail with reference to Figure 5, to selectively engage with the frame 360 and restrict rotation of the infant carrier module attached to the frame 360 relative to the base portion 310 of the docking module 300.

The frame 360 includes apertures 390, 391 in the planar plate portion 361. A first aperture 390 is positioned towards a rear of the frame 360 and a second aperture 391 is positioned towards a front of the frame 360. The rotation stop 380 is located towards a rear of the base portion 310. The rotation stop 380 may sit within the first aperture 390 when the frame 360 and infant carrier module are arranged in a forward facing position and engage with the planar plate portion 361 to restrict rotation from the forward facing position. The rotation stop 380 may sit within the second aperture 391 when the frame 360 and infant carrier module are arranged in a rearward facing position and engage with the planar plate portion 361 to restrict rotation from the rearward facing position.

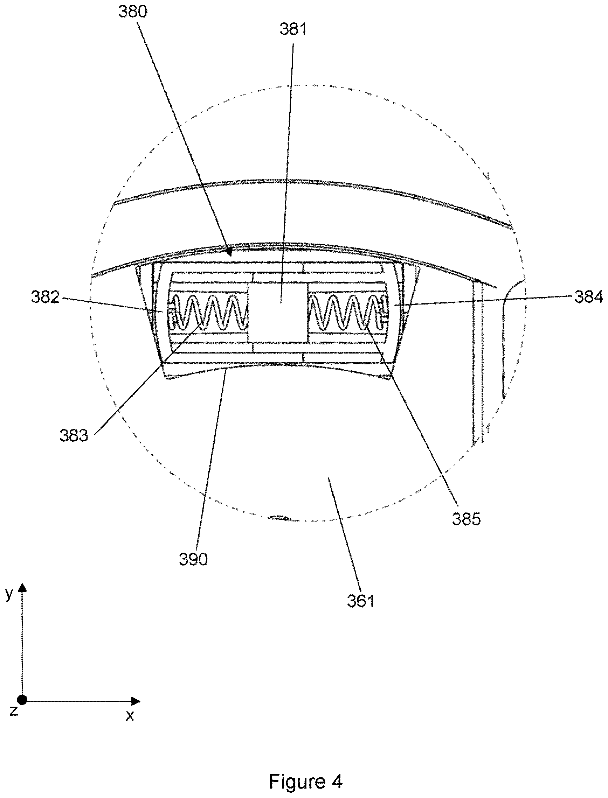

Figure 4 is a plan view of the rotation stop 380 of the docking module. The rotation stop 380 is configured to selectively restrict rotation of the frame relative to the base portion. The rotation stop 380 is positionable in an extended position and a retracted position, discussed with reference to Figure 5 below.

With the frame and infant carrier module in the forward facing position, the rotation stop 380 is arrangeable within the first aperture 390 in the planar plate portion 361 of the frame. The rotation stop 380 and apertures 390, 391 are mutually arranged such that the rotation stop 380 fits snugly within the apertures 390, 391. Therefore, when the rotation stop 380 is arranged within an aperture 390, 391, a relatively small rotation of the frame and infant carrier module causes the rotation stop 380 to engage with the planar plate portion 361 of the frame.

In Figure 4, the rotation stop 380 is shown to be extended within the first aperture 390 such that the frame and infant carrier module are arranged in a forward facing direction. Therefore, any rotation of the frame and infant carrier module from the forward facing direction would cause the rotation stop 380 to engage with the planar plate portion 361 of the frame.

The rotation stop 380 includes a fixed portion 381 that is fixed relative to a remainder of the base portion such that no lateral movement (x-direction and y-direction in the orientation shown in Figure 4) is possible. The only movement of the fixed portion 381 relative to the remainder of the base portion that is possible is a retraction of the rotation stop 380 into the base portion (z-direction in the orientation shown in Figure 4) and is described in relation to Figure 5 below.

The rotation stop 380 further includes a first moveable portion 382 that is moveable relative to the fixed portion 381. The first moveable portion 382 is moveable relative to the fixed portion 381 between a first position (as shown in Figure 4) in which the first moveable portion 382 is spaced a first distance from the fixed portion 381, and a second position (not shown) in which the first moveable portion 382 is spaced a second distance less than the first distance from the fixed portion 381. The first moveable portion 382 may translate relative to the fixed portion 381 along the x-direction shown in Figure 4.

A first spring 383 is positioned between the fixed portion 381 and the first moveable portion 382. Other resilient members, such as an elastic component, are envisaged. The first spring 383 is configured to urge the first moveable portion 382 away from the second position (not shown) and away from the fixed portion 381 towards the first position (as shown in Figure 4).

With the rotation stop 380 positioned within the first aperture 390, rotation of the infant carrier module relative to the docking module in a clockwise direction (in the view shown in Figure 4) away from the forward facing arrangement of the infant carrier module would cause the first moveable portion 382 to engage with the planar plate portion 361 of the frame. The first moveable portion 382 would be moved from the position shown in Figure 4 towards the fixed portion 381 against the action of the first spring 383, thereby compressing the first spring 383.

The first spring 383 would therefore exert a force to act against said rotation of the infant carrier module.

Accordingly, said rotation of the infant carrier module, due to cornering forces or side impact collision forces, would be counteracted by the first spring 383 to provide a more comfortable ride or reduced peak collision forces respectively. The comfort and/or safety of the infant is therefore improved.

The rotation stop 380 further includes a second moveable portion 384 that is moveable relative to the fixed portion 381. The second moveable portion 384 is moveable relative to the fixed portion 381 between a third position (as shown in Figure 4) in which the second moveable portion 384 is spaced a third distance from the fixed portion 381, and a fourth position (not shown) in which the second moveable portion 384 is spaced a fourth distance less than the third distance from the fixed portion 381. The second moveable portion 384 may translate relative to the fixed portion 381 along the x-direction shown in Figure 4.

Movement of the second moveable portion 384 from the third position to the fourth position may be in a direction opposite to movement of the first moveable portion 382 from the first position to the second position. The first distance may be equal to or different from the third distance. The second distance may be equal to or different from the fourth distance.

A second spring 385 is positioned between the fixed portion 381 and the second moveable portion 384. Other resilient members, such as an elastic component, are envisaged. The second spring 385 may have an equal or different spring rate to the first spring 383. The first spring 383 and the second spring 385 may have equal or different maximum travel distances. The first spring 383 and the second spring 385 may preferably be identical. The second spring 385 is configured to urge the second moveable portion 384 away from the fourth position (not shown) and away from the fixed portion 381 towards the third position (as shown in Figure 4).

Although the system 100 is described herein as having two springs 383, 385, in one example a single spring is provided and is positioned between the first moveable portion 382 and the second moveable portion 384, passing through or alongside the fixed portion 381. In this way, the first spring 383 and the second spring 385 may be portions of a single, longer spring.

With the rotation stop 380 positioned within the first aperture 390, rotation of the infant carrier module relative to the docking module in an anti-clockwise direction (in the view shown in Figure 4) away from the forward facing arrangement of the infant carrier module would cause the second moveable portion 384 to engage with the planar plate portion 361 of the frame. The second moveable portion 384 would be moved from the position shown in Figure 4 towards the fixed portion 381 against the action of the second spring 385, thereby compressing the second spring 385. The second spring 385 would therefore exert a force to act against said rotation of the infant carrier module.

Accordingly, said rotation of the infant carrier module, due to cornering forces or side impact collision forces, would be counteracted by the second spring 385 to provide a more comfortable ride or reduced peak collision forces respectively. The comfort and/or safety of the infant is therefore improved.

First 382 and second 384 moveable portions are shown to telescopically engage in Figure 4, but any mutual or non-mutual arrangement may be provided. Furthermore, a single shared fixed portion 381 is shown, but two fixed portions may instead be provided, one for each moveable portion 382, 384.

Figure 5 is a side sectional view of the rotation stop 380 shown in Figure 4. Figure 5 offers an alternative view of the rotation stop 380 to that shown in Figure 4.

In Figure 5, the rotation stop 380 is shown to be in an extended or deployed position. The rotation stop 380 is therefore positioned within an aperture and engaged with the planar plate portion as discussed with reference to Figure 4. Therefore, any rotation of the frame and infant carrier module would cause the rotation stop 380 to engage with the planar plate portion of the frame.

The fixed portion 381 is shown to extend below the first 383 and second 385 springs and is laterally fixed relative to a remainder of the base portion such that no lateral movement (x-direction and y-direction in the orientation shown in Figure 5) is possible. The only movement of the fixed portion 381 relative to the remainder of the base portion that is possible is a retraction of the rotation stop 381 into the base portion (z-direction in the orientation shown in Figure 5).

A vacant space 386 is provided below the fixed portion 381. To move the rotation stop 380 from the engaged position (as shown in Figure 5) to the disengaged position (not shown), the fixed portion 381 is moved downwards (in the orientation shown in Figure 5) into the space 386 below the fixed portion 381. As the first moveable portion 382 and the second moveable portion 384 are attached to the fixed portion 381, the first moveable portion 382 and the second moveable portion 384 are withdrawn from within the aperture. Accordingly, the infant carrier module may then freely rotate.

A lower spring 387 is provided with the space 386 below the fixed portion 381. The lower spring 387 is configured and oriented to oppose movement of the fixed portion 381 downwards into the space 386 below the fixed portion 381. Accordingly, the lower spring 387 may urge the fixed portion 381, along with the first moveable portion 382 and the second moveable portion 384 and first 383 and second 385 springs attached thereto, away from the space 386 and into an engaged position (as shown in Figure 5). An actuator may be provided and may be operable to move the fixed portion 381 downward into the space 386 against the action of the lower spring 387 to move the rotation stop 380 from the engaged position to the disengaged position. When the actuator is no longer actuated, the lower spring 387 may urge the rotation stop 380 from the disengaged position into the engaged position.

Figure 6 is a side schematic view of the infant car seat system 100 shown in Figure 1. The shell portion 305 is shown in a rearward facing direction, but the shell portion 305 may be arranged in any orientation, such as forward facing or sideways facing. An orientation of the infant carrier module (not shown) will match the orientation of the shell portion 305, when the infant carrier module is docked within the shell portion 305. The shell portion 305 may be lockable in a rearward facing direction or a forward facing direction, as is typically used when travelling. A rotation release actuator 395 is provided on the docking module 300 in the form of a button, although other actuators such as a lever or slider are envisaged.

The shell portion 305 is shown to be attached to the planar plate portion 361 of the base portion 310 of the docking module 300. The planar plate portion 361 is rotatably attached to the remainder of the base portion 310 of the docking module 300 via a pivot pin 400. Although a pin 400 is shown, any suitable connection mechanism, component or apparatus that allows rotation may be used. Accordingly the shell portion 305, and an infant carrier module docked therein, is rotatable relative to the base portion 310 of the docking module 300 about a rotation axis 410.

The rotation stop 380 is moveable between the engaged and disengaged positions along a rotation stop axis 420. The rotation stop axis 420 is laterally spaced from the rotation axis 410 by a distance d. Accordingly, with the rotation stop 380 in the engaged position, rotation of the shell portion 305 about the rotation axis 410 causes a substantially linear force to be applied to the rotation stop 380. Said force applied to the rotation stop may move the first moveable portion 382 or the second moveable portion 384 towards the fixed portion 381 against the action of the first spring 383 or the second spring 385 respectively, causing the spring 383, 385 to compress. In this way, rotation of the shell portion 305 and an infant carrier module docked therein about the rotation axis 410 is resisted. A maximum rotation of the shell portion 305 about the rotation axis 410 that is possible is set by the travel distance of the spring 383, 385. Once the spring 383, 385 has been fully compressed, no further rotation of the shell portion 305 about the rotation axis 410 in the same direction is possible.

Although not shown in the Figures, the first spring 383 and the second spring 385 may have two strengths and/or levels, or a second shorter spring may be provided in each instance, to provide a first resistance for cornering comfort and a second resistance for vehicle collision performance, as discussed herein. Furthermore, although rotation stop 380 is described herein as having two springs 383, 385, in one example a single spring is provided and is positioned between the first moveable portion 382 and the second moveable portion 384, passing through or alongside the fixed portion 381. In this way, the first spring 383 and the second spring 385 may be portions of a single, longer spring.

## Claims

1. An infant car seat system comprising:
a docking module configured to be securable to a vehicle seat;
an infant carrier module configured to receive an infant therein, the infant car seat system configured such that the infant carrier module is rotatable within the docking module about a rotation axis; and
a rotation stop selectively operable to restrict rotation of the infant carrier module relative to the docking module about the rotation axis;
wherein the rotation stop is compressible in a direction of rotation about the rotation axis.

2. The infant car seat system of claim 1, wherein the infant carrier module comprises a seat portion attached to a backrest portion via a locking hinge having two locking positions such that the infant carrier module is configurable in:
an upright position in which the seat portion and the backrest portion are relatively inclined at a first angle; and
a lie flat position in which the seat portion and the backrest portion are relatively inclined at a second angle, greater than the first angle.

3. The infant car seat system of claim 1 or claim 2, wherein the infant car seat system is configured such that the infant carrier module is adjustable within the docking module.

4. The infant car seat system of claim 1, wherein the infant car seat system is configured such that the infant carrier module is releasably dockable within the docking module.

5. The infant car seat system of claim 4, wherein the system further comprises a docking lock mechanism configured to selectively prevent undocking of the infant carrier module from the docking module.

6. The infant car seat system of claim 1, wherein the infant carrier module comprises a seat portion attached to a backrest portion, and the infant carrier module further comprises a detachable carrier handle configured to be securable to the seat portion and/or the backrest portion.

7. The infant car seat system of claim 1, wherein the infant carrier module comprises a seat portion attached to a backrest portion, and the system further comprises a headrest attached to the backrest portion and releasably attachable to the docking module.

8. The infant car seat system of claim 1, wherein the rotation stop is resilient.

9. The infant car seat system of claim 8, wherein the rotation stop comprises:
a fixed portion;
a first moveable portion configured to be moveable relative to the fixed portion between a first position in which the first moveable portion is spaced a first distance from the fixed portion, and a second position in which the first moveable portion is spaced a second distance less than the first distance from the fixed portion; and
a first resilient member positioned between the fixed portion and the first moveable portion, wherein the first resilient member is configured to urge the first moveable portion away from the second position and towards the first position.

10. The infant car seat system of claim 9, wherein the first moveable portion is positionable relative to the fixed portion in a first intermediate position between the first position and the second position, wherein the first resilient member is configured such that a greater force is required to move the first moveable portion from the first position to the first intermediate position than is required to move the first moveable portion from the first intermediate position to the second position.

11. The infant car seat system of claim 9 or 10, wherein the rotation stop further comprises:
a second moveable portion configured to be moveable relative to the fixed portion between a third position in which the second moveable portion is spaced a third distance from the fixed portion, and a fourth position in which the second moveable portion is spaced a fourth distance less than the third distance from the fixed portion; and
a second resilient member positioned between the fixed portion and the second moveable portion, wherein the second resilient member is configured to urge the second moveable portion away from the fourth position and towards the third position;
wherein a direction of movement of the first moveable portion from the first position to the second position is in a direction opposite to a direction of movement of the second moveable portion from the third position to the fourth position.

12. The infant car seat system of claim 11, wherein the second moveable portion is positionable relative to the fixed portion in a second intermediate position between the third position and the fourth position, wherein the second resilient member is configured such that a greater force is required to move the second moveable portion from the third position to the second intermediate position than is required to move the second moveable portion from the second intermediate position to the fourth position.

13. The infant car seat system of claim 1, wherein the rotation stop is configured to be moveable between:
an engaged position in which the rotation stop is configured to restrict rotation of the infant carrier module relative to the docking module about the rotation axis; and
a disengaged position in which rotation of the infant carrier module relative to the docking module about the rotation axis is unrestricted.

14. The infant car seat system of claim 13, wherein the rotation stop is configured to be urged from the disengaged position to the engaged position, and the infant car seat system comprises an actuator operable to move the rotation stop from the engaged position to the disengaged position.
